# FASCICULE DE BREVET EUROPEEN

(11) **EP 3 329 143 B1**
(45) Date de publication et mention de la délivrance du brevet: **18.09.2019**
(21) Numéro de dépôt: 16744733.3
(22) Date de dépôt: 26.07.2016
(51) Int. Cl.: F16F 15/133

(54) **AMORTISSEUR DE VIBRATIONS COMPORTANT UN SUIVEUR DE CAME A ROULEMENT**
SCHWINGUNGSDÄMPFER MIT EINEM ROLLENNOCKENFOLGER
VIBRATION DAMPER COMPRISING A ROLLER CAM FOLLOWER

(30) Priorité: 28.07.2015 FR 1557216
(43) Date de publication de la demande: 06.06.2018
(73) Titulaire: Valeo Embrayages, 80009 Amiens Cedex 2 (FR)
(72) Inventeur: LOPEZ PEREZ, Carlos, 28947 Fuenlabrada (ES)
(86) Numéro de dépôt international: PCT/EP2016/067839
(87) Numéro de publication internationale: WO 2017/017113

(56) Documents cités:
- DE-A1-102012 218 877
- FR-A1- 3 008 152
- US-A- 5 697 261

## Description

### Domaine technique

L'invention se rapporte au domaine des amortisseurs de torsion destinés à équiper les transmissions de véhicule automobile.

### Arrière-plan technologique

Les moteurs à explosions ne génèrent pas un couple constant et présentent des acyclismes provoquées par les explosions se succédant dans leurs cylindres. Ces acyclismes génèrent des vibrations qui sont susceptibles de se transmettre à la boîte de vitesses et d'engendrer ainsi des chocs, bruits et nuisances sonores, particulièrement indésirables. Afin de diminuer les effets indésirables des vibrations et améliorer le confort de conduite des véhicules automobiles, il est connu d'équiper les transmissions de véhicule automobile avec des amortisseurs de torsion. De tels amortisseurs de torsion équipent notamment les doubles volants amortisseurs (DVA), les frictions d'embrayage, ou les embrayages de verrouillage, également appelés embrayages « lock-up ».

Le document FR3008152 divulgue un double volant amortisseur comportant un volant d'inertie primaire et un volant d'inertie secondaire mobiles en rotation l'un par rapport à l'autre autour d'un axe de rotation X. Le double volant amortisseur comporte des moyens élastiques d'amortissement qui sont formés de plusieurs lames élastiques montées sur l'un des volants d'inertie et coopérant chacune avec un galet associé monté mobile en rotation sur l'autre volant. La flexion des lames élastiques permet d'amortir les vibrations et irrégularités de rotation entre les volants d'inertie primaire et secondaire tout en assurant la transmission du couple.

Chaque galet est monté en rotation sur une tige respective qui est fixée sur l'un des volants. Des corps roulants, tels que des billes ou des rouleaux, sont disposés dans un espace de roulement formé radialement entre le galet et la tige. L'espace de roulement est rempli de lubrifiant afin de limiter les frottements.

Généralement, afin de garantir l'étanchéité d'un tel espace de roulement, des joints à lèvres sont placés de part et d'autre de l'espace de roulement. Toutefois, de tels joints à lèvres génèrent des frottements parasitaires susceptibles de nuire aux performances du double volant amortisseur.

### Résumé

L'invention vise à remédier à ces problèmes en proposant un amortisseur de vibrations du type précité permettant de filtrer efficacement les vibrations.

Selon un mode de réalisation, l'invention fournit un amortisseur de vibrations pour véhicule automobile, notamment pour une chaine de transmission de véhicule automobile, comportant :
- un premier élément et un second élément mobiles en rotation l'un par rapport à l'autre autour d'un axe X ; et
- un suiveur de came coopérant avec une came, le suiveur de came étant agencé pour transmettre un couple entre le premier élément et la came et la came étant agencée pour transmettre un couple entre le suiveur de came et le second élément ; la came étant liée au second élément par une liaison élastique qui est agencée pour se déformer et permettre un déplacement du suiveur de came sur la came et une rotation relative entre les premier et second éléments pour amortir les acyclismes entre les premier et second éléments,
le suiveur de came comportant :
- une tige présentant une extrémité distale;
- un galet, coopérant avec la came, coaxial à la tige ;
- des corps roulants disposés dans un espace de roulement qui contient un lubrifiant et est arrangé entre une piste de roulement externe portée par le galet et une piste de roulement interne portée par la tige pour permettre une rotation relative entre le galet et la tige ; et
- un couvercle qui est disposé en regard de l'extrémité distale de la tige et est fixé de manière étanche sur le galet de manière à recouvrir l'espace de roulement.

Ainsi, le couvercle permet d'assurer l'étanchéité de l'espace de roulement, au niveau de l'extrémité de la tige. Un tel couvercle est en outre plus facile à monter qu'un joint d'étanchéité dynamique à lèvres.

De préférence, le couvercle est disposé à distance de l'extrémité distale de la tige.

Le couvercle n'est lié qu'au galet.

Ainsi, le couvercle ne génère pas de frottement parasitaire entre la tige et le galet, ce qui permet d'améliorer les performances de filtration de l'amortisseur.

Selon d'autres modes de réalisation avantageux, un tel amortisseur de vibrations peut présenter une ou plusieurs des caractéristiques suivantes :
- les corps roulants sont des rouleaux, des aiguilles ou des billes.
- le couvercle est placé à une distance axiale de l'extrémité distale de la portion de support comprise entre 0.3 et 0.5 mm.
- le galet est partiellement logé dans un lamage réalisé dans le premier élément, de manière à améliorer l'étanchéité.
- le galet comporte une rainure circulaire et le couvercle comporte un rebord circulaire reçu dans ladite rainure circulaire.
- le rebord circulaire du couvercle est équipé d'un joint annulaire en élastomère.
- le couvercle comporte une tôle métallique et le joint annulaire en élastomère est surmoulé sur la tôle métallique.
- selon un mode de réalisation, la rainure circulaire est ménagée sur un pourtour interne du galet. Un tel mode de réalisation permet de limiter l'encombrement axial du suiveur de came.
- selon un autre mode de réalisation, la rainure circulaire est ménagée sur un pourtour externe du galet.
- l'extrémité distale de la portion de support comporte une cavité qui contient du lubrifiant et débouche en regard du couvercle. Ainsi, une telle cavité permet d'augmenter le volume de lubrifiant stocké dans le suiveur de came.
- la cavité est agencée au centre de l'extrémité distale de la tige, au moins en partie sur l'axe de la tige.
- la cavité est un trou borgne.
- un passage d'orientation radiale disposé axialement entre le couvercle et l'extrémité distale de la tige autorise une circulation de lubrifiant, notamment sous les effets de la force centrifuge.
- le premier élément comporte un rebord externe qui est disposé radialement à l'extérieur du galet et qui présente un évidement arqué dans lequel le galet est au moins partiellement logé.
- le rebord externe est séparé du pourtour extérieur du galet par un interstice dont la dimension radiale est inférieure à 0.5 mm, de préférence comprise entre 0.3 et 0.1 mm. Ainsi, un interstice présentant de telles dimensions permet de renforcer l'étanchéité de l'espace de roulement.
- l'extrémité distale de la tige comporte un collet faisant saillie radialement.
- le suiveur de came comporte une bague de retenue qui est montée sur la tige et est en appui axial en direction de l'extrémité distale de la tige contre un épaulement ménagé dans la portion de support.
- le galet est retenu axialement entre le collet et la bague de retenue.
- la bague de retenue est bloquée axialement entre le premier élément et l'épaulement ménagé dans la portion de support.
- le galet comporte un pourtour interne présentant un premier épaulement et un second épaulement ménagés respectivement de part et d'autre de la piste de roulement externe et coopérant respectivement avec le collet et la bague de retenue de manière à limiter le mouvement axial du galet. Un tel suiveur de came est particulièrement compact selon la direction axiale.
- le galet comporte un pourtour interne présentant un épaulement bordant la piste de roulement externe, à l'opposé du premier élément, et l'extrémité distale de la portion de support comporte un collet faisant saillie radialement vers l'extérieur, ledit collet coopérant avec ledit épaulement de manière à retenir le galet dans une direction opposée au premier élément.
- le galet comporte un pourtour interne présentant un épaulement bordant la piste de roulement externe, en regard du premier élément et la tige comporte un épaulement bordant la piste de roulement interne, en regard du premier élément et le suiveur de came comporte une bague qui est montée sur la tige et est en appui axial en direction opposée au premier élément contre l'épaulement du galet et contre l'épaulement de la tige.
- le suiveur de came comporte une rondelle d'étanchéité qui comporte un bord externe fixée de manière étanche au galet et un bord interne coopérant de manière étanche avec la bague de retenue.
- le bord externe de la rondelle d'étanchéité est reçu dans une rainure circulaire ménagée sur le pourtour radialement interne du galet.
- la rondelle d'étanchéité est réalisée en matériau élastomère.
- la tige comporte une portion de fixation fixée au premier élément.
- la portion de fixation est montée dans un orifice ménagé dans le premier élément.
- l'extrémité distale de la tige est opposée à la portion de fixation.
- le couvercle est apte à se déformer élastiquement pour venir en contact avec l'extrémité distale de la tige lorsqu'une force est exercée sur le couvercle en direction de l'extrémité distale et à retourner vers une position libre dans laquelle le couvercle est disposé à distance de l'extrémité distale de la tige lorsqu'aucune force n'est exercée sur le couvercle en direction de l'extrémité distale de la tige.
- le couvercle comporte une tôle traitée et durcie afin de lui conférer l'élasticité requise.
- l'un des premier et second éléments est un volant primaire d'un double volant amortisseur destiné à être fixé à une vilebrequin du moteur à combustion et l'autre des premier et second éléments est un volant secondaire du double volant amortisseur.
- la surface de came est portée par une lame élastique fixée au second élément.
- la lame élastique est agencée pour se déformer pour amortir les acyclismes.
- La lame élastique comporte une extrémité libre se déplaçant avec une composante radiale.
- le galet est disposé radialement à l'extérieur de la lame élastique. Une telle disposition permet de retenir radialement la lame élastique lorsqu'elle est soumise à la force centrifuge.
- la lame élastique est agencée pour se déformer dans un plan perpendiculaire à l'axe de rotation X.
- l'amortisseur de vibrations comporte une pluralité de lames élastiques présentant une surface de came et une pluralité de suiveurs de cames coopérant chacun avec l'une des lames élastiques.

L'invention a également pour objet, un amortisseur de vibrations pour véhicule automobile, notamment pour une chaine de transmission de véhicule automobile, comportant :
- un premier élément et un second élément mobiles en rotation l'un par rapport à l'autre autour d'un axe X ; et
- un suiveur de came coopérant avec une came, le suiveur de came étant agencé pour transmettre un couple entre le premier élément et la came et la came étant agencée pour transmettre un couple entre le suiveur de came et le second élément ; la came étant liée au second élément par une liaison élastique agencée pour se déformer et permettre un déplacement du suiveur de came sur la came et une rotation relative entre les premier et second éléments pour amortir les acyclismes entre les premier et second éléments,
le suiveur de came comportant :
- une tige comportant une portion de fixation fixée au premier élément et présentant une extrémité distale;
- un galet, coopérant avec la came, coaxial à la tige;
- des corps roulants disposés dans un espace de roulement qui contient un lubrifiant et est arrangé entre une piste de roulement externe portée par le galet et une piste de roulement interne portée par la tige pour permettre une rotation relative entre le galet et la tige ;
le premier élément comportant un rebord externe qui est disposé radialement à l'extérieur du galet et qui présente un évidement arqué dans lequel le galet est au moins partiellement logé, le rebord externe étant séparé du pourtour extérieur du galet par un interstice autorisant la rotation du galet par rapport à la tige et limitant la circulation de lubrifiant entre le galet et le rebord externe.

De préférence, la dimension radiale de l'interstice est inférieure à 0.5 mm, de préférence comprise entre 0.1 et 0.3 mm.

Selon un mode de réalisation, l'invention fournit également une chaîne de transmission et un véhicule automobile comportant un tel amortisseur de vibrations.

### Brève description des figures

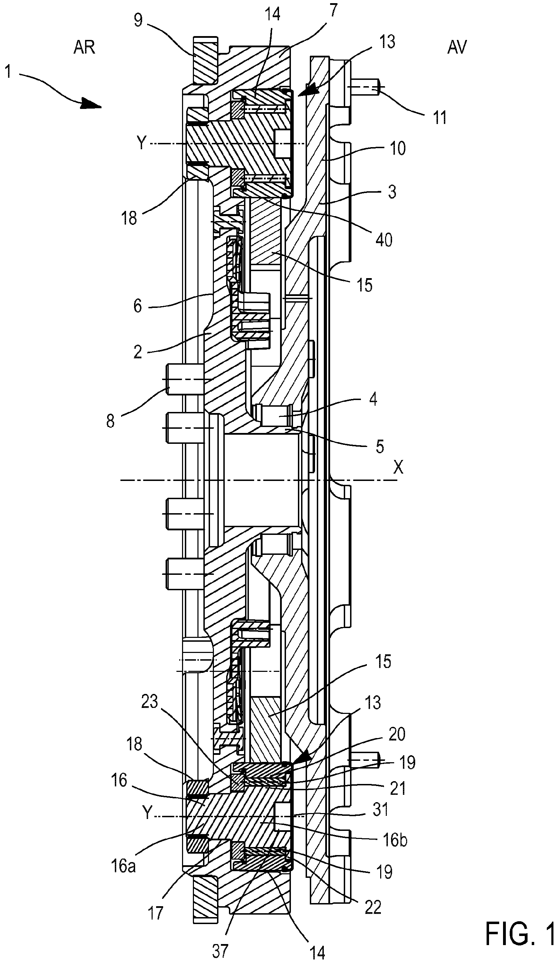

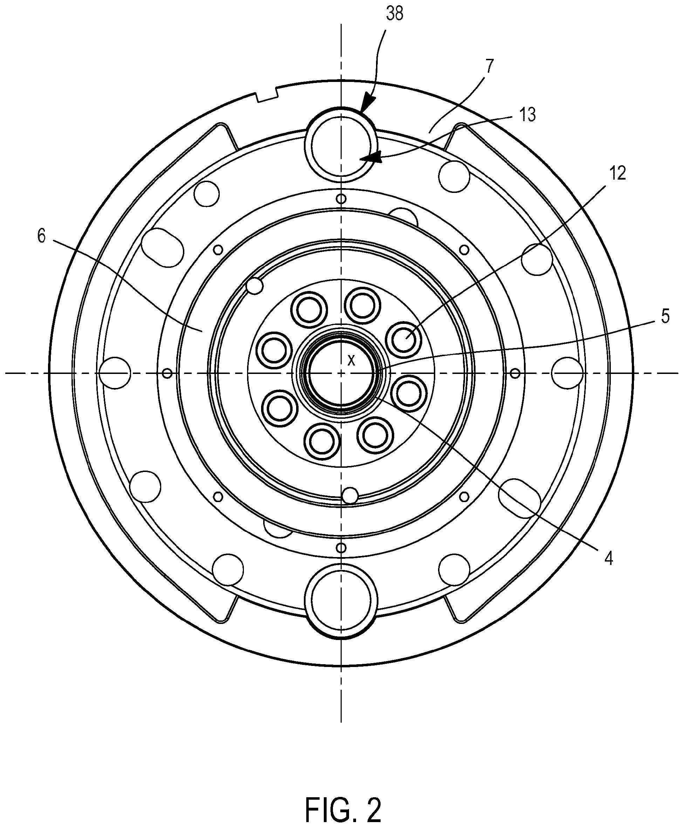

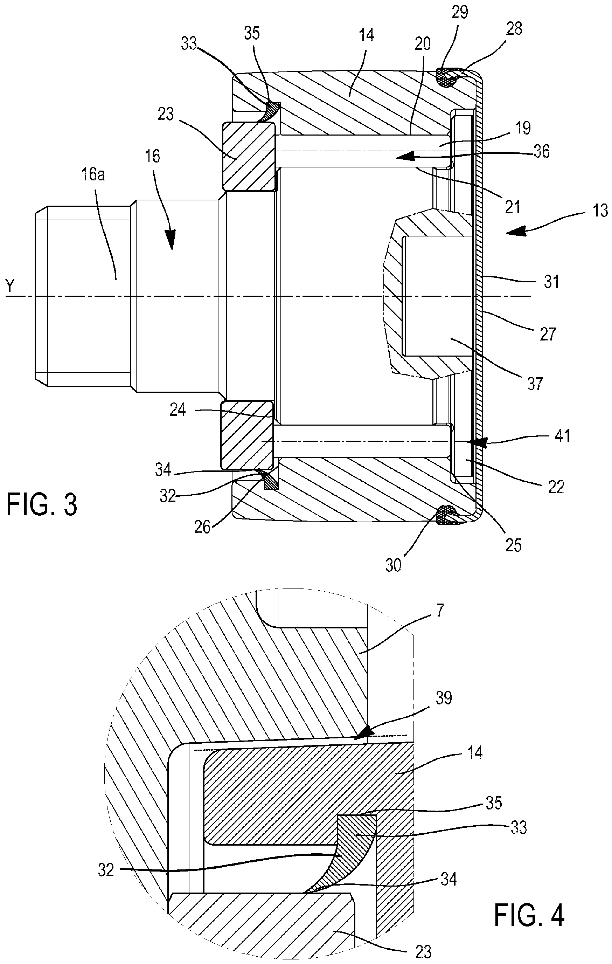

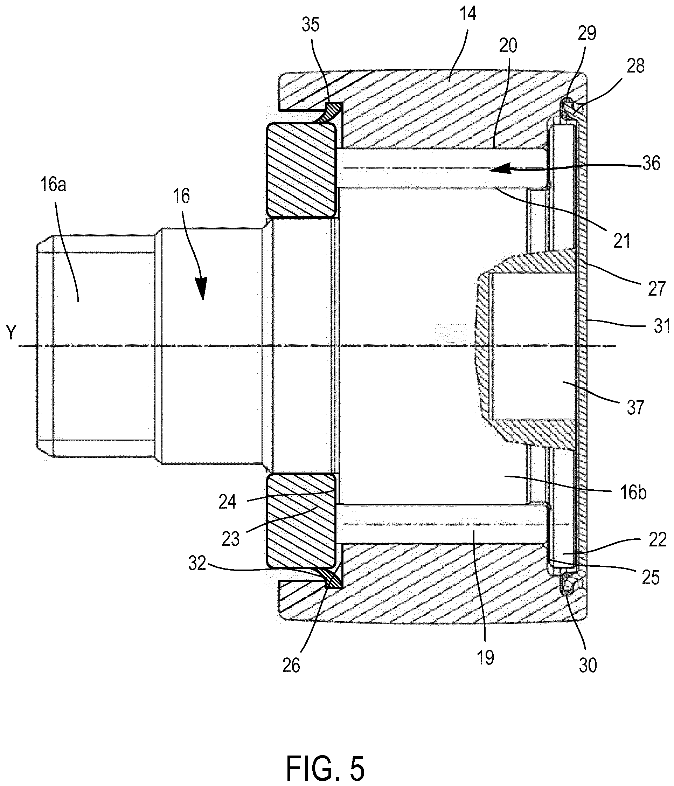

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue en coupe d'un double volant amortisseur.
- **La** **figure 2** est une vue avant du volant primaire du double volant amortisseur de la figure 1.
- **La** **figure 3** est une vue schématique en coupe d'un suiveur de came selon un premier mode de réalisation.
- **La** **figure 4** est une vue détaillée illustrant l'interstice entre le suiveur de came et un rebord externe du volant primaire.
- **La** **figure 5** est une vue schématique en coupe d'un suiveur de came selon un second mode de réalisation.

### Description détaillée de modes de réalisation

Dans la description et les revendications, on utilisera, les termes "externe" et "interne" ainsi que les orientations "axiale" et "radiale" pour désigner, selon les définitions données dans la description, des éléments de l'amortisseur de vibrations. Par convention, l'axe X de rotation de l'amortisseur de vibrations détermine l'orientation axiale. Par ailleurs, lorsque l'on désigne un élément d'un suiveur de came, l'orientation "radiale" est dirigée orthogonalement à l'axe Y de rotation du galet du suiveur de came. Néanmoins, lorsque l'on désigne tout autre élément de l'amortisseur de vibrations, l'orientation "radiale" est dirigée orthogonalement à l'axe X de rotation de l'amortisseur de vibrations. Un élément proche du l'axe en cause est qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé plus proche du moteur thermique étant désigné par arrière et un élément destiné à être placé plus proche de la boîte de vitesses étant désigné par avant.

L'amortisseur de vibrations est destiné à être disposé dans la chaîne de transmission d'un véhicule automobile, entre le moteur et la boîte de vitesses. Il peut notamment être intégré à un double volant amortisseur, tel qu'illustré sur les figures annexées, ou à un disque d'embrayage.

En relation avec les figures 1 à 4, l'on observe un double volant amortisseur 1 comprenant un volant d'inertie primaire 2, destiné à être fixé au bout d'un vilebrequin d'un moteur à combustion interne, non représenté, et un volant d'inertie secondaire 3 qui est centré et guidé sur le volant primaire 2 au moyen d'un palier 4, tel qu'un palier à roulement à billes. Le volant secondaire 3 est destiné à former le plateau de réaction d'un embrayage, non représenté, relié à l'arbre d'entrée d'une boîte de vitesses. Les volants primaire 2 et secondaire 3 sont destinés à être montés mobiles autour d'un axe de rotation X et sont, en outre, mobiles en rotation l'un par rapport à l'autre autour dudit axe X.

Le volant primaire 2 comporte un moyeu 5 radialement interne supportant le palier 4, une portion annulaire 6 s'étendant radialement depuis le moyeu 5 et un rebord externe 7, s'étendant axialement vers l'avant depuis la périphérie externe de la portion annulaire 6. Le volant primaire 2 est pourvu d'orifices 12, illustrés sur la figure 2, permettant le passage de vis de fixation 8, illustrées sur la figure 1, destinées à la fixation du volant primaire 2 sur le vilebrequin du moteur. Le volant primaire 2 porte, sur sa périphérie extérieure, une couronne dentée 9 pour l'entraînement en rotation du volant primaire 2, à l'aide d'un démarreur.

Le volant secondaire 3 comporte une surface annulaire plane 10, tournée vers l'avant, destinée à former une surface d'appui pour une garniture de friction d'un disque d'embrayage, non représenté. Le volant secondaire 3 comporte, à proximité de son bord externe, des plots 11 et des orifices, non représentés, servant au montage d'un couvercle du dispositif d'embrayage. Le volant secondaire 3 comporte en outre des orifices, non représentés, disposés en vis-à-vis des orifices 12 formés dans le volant primaire 2, et destinés au passage des vis de fixation 8, lors du montage du double volant amortisseur 1 sur le vilebrequin.

En relation avec la figure 1, l'on observe que le double volant amortisseur 1 comporte des éléments suiveurs de came 13 qui sont fixés sur le volant primaire 2 et présentent chacun un galet 14 monté mobile en rotation sur le volant primaire 2 autour d'un axe de rotation Y. Chaque galet 14 coopère avec une surface de came 40 portée par une lame élastique 15 fixée sur le volant secondaire 3. Les galets 14 sont disposés radialement à l'extérieur de leur surface de came respective de sorte à maintenir radialement les lames élastiques 15 lorsqu'elles sont soumises à la force centrifuge. Les galets 14 sont agencés pour rouler contre ladite surface de came 40 lors d'un mouvement relatif entre les volants primaire 2 et secondaire 3. Chaque surface de came 40 est agencée de telle sorte que, pour une rotation relative entre le volant primaire 2 et le volant secondaire 3 dans un sens ou dans l'autre, par rapport à une position angulaire relative de repos, le galet 14 se déplace sur la surface de came 40 et, ce faisant, exerce un effort de flexion sur la lame élastique 15. Par réaction, la lame élastique 15 exerce sur le galet 14 une force de rappel ayant une composante circonférentielle qui tend à ramener les volants primaire 2 et secondaire 3 vers leur position angulaire relative de repos. Ainsi, les lames élastiques 15 sont aptes à transmettre un couple entraînant du volant primaire 2 vers le volant secondaire 3 (sens direct) et un couple résistant du volant secondaire 3 vers le volant primaire 2 (sens rétro). Par ailleurs, les vibrations de torsion et les irrégularités de couple qui sont produites par le moteur et transmises par l'arbre de vilebrequin au volant primaire 2 sont amorties par la flexion des lames élastiques 15. Pour plus de détails quant au fonctionnement et à la structure des lames élastiques 15, on pourra notamment se reporter aux documents FR3000155, FR3002605 et FR3008152.

On observe notamment sur la figure 1 que chaque suiveur de came 14 comprend une tige 16 qui comporte une portion de fixation 16a, montée dans un orifice 17 ménagé dans la portion annulaire 6 du volant primaire 2. La portion de fixation 16a est avantageusement emmanchée à force dans ledit orifice 17. Dans le mode de réalisation représenté sur la figure 1, l'extrémité de la portion de fixation 16a débouche côté moteur et est pourvue d'un filetage coopérant avec un écrou 18 de manière à retenir axialement la tige 16 sur le volant primaire 2. La tige 16 comporte une portion de support 16b qui fait saillie vers l'avant, en direction du volant secondaire 3 et sur laquelle un galet 14 est monté en rotation selon l'axe Y.

La structure des suiveurs de came 14 est représentée de manière détaillée sur la figure 3. De façon à réduire les frottements parasitaires, le galet 14 est monté en rotation sur la tige 16 par l'intermédiaire d'une pluralité de corps roulants 19. Les corps roulants 19 sont par exemple des billes, des rouleaux ou des aiguilles, comme dans le mode de réalisation représenté. Les corps roulants 19 sont disposés dans un espace de roulement 36 qui est formé entre une piste de roulement externe 20 qui est ménagée sur le pourtour interne du galet 14 et une piste de roulement interne 21 qui est ménagée sur le pourtour externe de la portion de support 16b.

Les corps roulants 19 sont maintenus axialement à l'intérieur de l'espace de roulement 36 au moyen, d'une part, d'un collet 22 formé à l'extrémité distale de la tige 16, et d'autre part, d'une bague de retenue 23 montée sur la tige 16. Le collet 22 fait saillie radialement vers l'extérieur depuis l'extrémité distale de la portion de support 16b. La bague de retenue 23 est maintenue axialement entre, d'une part, la portion annulaire 6 du volant primaire 2 et, d'autre part, un épaulement 24 formé sur la tige 16 et bordant la piste de roulement interne 21, vers l'arrière.

Par ailleurs, le pourtour interne du galet 14 comporte un épaulement avant 25 et un épaulement arrière 26 ménagés respectivement de part et d'autre de la piste de roulement externe 20 et coopérant respectivement avec le collet 22 et la bague de retenue 23 de manière à limiter le mouvement axial du galet 14 par rapport à la tige 16.

L'espace de roulement 36 est rempli d'un lubrifiant, tel que de la graisse. Afin de maintenir le lubrifiant à l'intérieur de l'espace de roulement 36, notamment lorsque le suiveur de came 13 est soumis à la force centrifuge, le suiveur de came 13 est équipé de moyens d'étanchéité.

A l'avant, le suiveur de came 13 comporte un couvercle 27 qui est fixé de manière étanche sur le galet 14. Le couvercle 27 comporte une portion plane circulaire 31 d'orientation radiale en regard de l'extrémité distale de la tige 16.

La distance axiale séparant l'épaulement avant 25 de la face avant du galet 14, de préférence plane, est plus grande que la dimension axiale du collet 22. Ainsi le couvercle 27 est plaqué contre la face avant du galet 14 et est maintenu à distance de l'extrémité distale de la tige 16.

Le couvercle 27 comporte en outre un rebord circulaire 28 faisant saillie axialement vers l'arrière et dont l'extrémité est rabattue vers l'intérieur. Le rebord circulaire 28 est équipé d'un joint élastomère annulaire 29. Le rebord circulaire 28 du couvercle 27 est reçu dans une rainure circulaire 30 ménagée sur le galet 14. Dans le mode de réalisation représenté sur la figure 3, la rainure circulaire 30 est ménagée sur le pourtour externe du galet 14.

La portion plane circulaire 31 est disposée axialement à distance de l'extrémité distale de la tige 16 de telle sorte que le couvercle 27 n'exerce pas de frottement entre la tige 16 et le galet 14. La portion plane circulaire 31 est, par exemple, placée à une distance axiale comprise entre 0.3 et 0.5 mm. De plus, le couvercle 27 présente une élasticité lui permettant de se déformer de manière élastique de sorte à, d'une part, venir en contact avec l'extrémité distale de la tige 16 lorsqu'une force dirigée vers l'arrière est exercée sur le couvercle 27 et, d'autre part, retourner dans une position libre dans laquelle le couvercle 27 est disposé à distance axiale de l'extrémité distale de la tige 16 lorsqu'aucune force axiale n'est plus exercée sur le couvercle 27. Ainsi, pour emmancher à force la tige 16 dans l'orifice 17 du volant primaire 1, l'effort d'emmanchement peut être exercé contre le couvercle 27.

Selon un mode de réalisation, le couvercle 27 est formé d'une tôle emboutie et d'un joint élastomère surmoulé sur le rebord circulaire 28 de la tôle emboutie. La tôle est mince, c'est-à-dire comprise entre 0.2 et 0.8 mm, par exemple de l'ordre de 0.5 mm. De manière avantageuse, la tôle est traitée et durcie afin de lui conférer l'élasticité requise.

A l'arrière, l'étanchéité de l'espace de roulement 36 est assurée au moyen d'une rondelle d'étanchéité 32. La rondelle d'étanchéité 32 est par exemple réalisée en élastomère. Elle comporte un bord externe 33 qui est monté de manière étanche dans une rainure circulaire 35 formée dans le pourtour interne du galet 14. Par ailleurs, elle comporte un bord interne 34 équipé d'une lèvre d'étanchéité qui est en contact avec le pourtour externe de la bague de retenue 23 de manière à assurer l'étanchéité.

Par ailleurs, en relation avec la figure 2, l'on observe que le rebord externe 7 du volant primaire 2 comporte un évidement 38 dans lequel est logée au moins une partie du suiveur de came 13. L'évidement 38 comporte une forme arquée qui épouse la forme du galet 14. En relation avec la figure 4, l'on observe que l'interstice 39 entre le pourtour extérieur du galet 14 et le rebord externe 7 présente une dimension radiale faible, c'est-à-dire inférieure à 0.5 mm, de sorte à renforcer l'étanchéité de l'espace de roulement 36, côté arrière. Compte-tenu des tolérances de fabrication du volant primaire 1 et des éléments du suiveur de came 13, la dimension radiale de l'interstice 39 est avantageusement comprise entre 0.1 et 0.3 mm.

En revenant à la figure 3, l'on observe que la tige 16 comporte une cavité centrale 37 borgne ménagée au niveau de son extrémité distale en regard du couvercle 27. La cavité centrale 37 débouche en regard du couvercle 27 et est remplie de lubrifiant. La cavité centrale 37 constitue ainsi un réservoir de lubrifiant apte à assurer la lubrification de l'espace de roulement 36 pendant toute la durée de vie de l'amortisseur de vibrations dans l'hypothèse où malgré les moyens d'étanchéité précités, une portion du lubrifiant initialement contenue dans l'espace de roulement 36 viendrait à s'échapper.

On observe en outre que du fait de la distance axiale entre l'extrémité distale de la tige 16 et la portion plane circulaire 31 du couvercle 27, un passage 41 d'orientation radiale est disposé axialement entre le couvercle 27 et l'extrémité distale de la tige 16. Un tel passage 41 autorise une circulation de lubrifiant, notamment de la cavité centrale 37 vers l'espace de roulement 36, sous les effets de la force centrifuge.

Sur la figure 5, on observe un suiveur de came 13 selon un second mode de réalisation. Ce suiveur de came 13 diffère du suiveur de came décrit précédemment par la manière dont est fixé le couvercle 27. En effet, dans ce mode de réalisation, le rebord circulaire 28 du couvercle est reçu dans une rainure circulaire 30 qui est formée sur le pourtour interne du galet 14 et non sur son pourtour externe. Aussi, dans ce mode de réalisation, le rebord circulaire 28 du couvercle 27 qui fait saillie axialement vers l'arrière présente une extrémité rabattue vers l'extérieur.

Ainsi, la rainure circulaire 30 n'empiète pas sur la dimension axiale du galet 14 susceptible de coopérer avec la lame élastique 15. Dès lors, pour une même surface du galet 14 susceptible de coopérer avec la lame élastique, la dimension axiale du galet 14 peut être réduite. Un tel mode de réalisation permet donc de limiter la dimension axiale du suiveur de came 13.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. L'étendue de la protection est définie par les revendications.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Amortisseur de vibrations pour véhicule automobile, notamment pour une chaine de transmission de véhicule automobile, comportant :
- un premier élément (2) et un second élément (3) mobiles en rotation l'un par rapport à l'autre autour d'un axe X ; et
- un suiveur de came (13) coopérant avec une came (40), le suiveur de came (13) étant agencé pour transmettre un couple entre le premier élément (2) et la came (40) et la came étant agencée pour transmettre un couple entre le suiveur de came (13) et le second élément (3) ; la came (40) étant liée au second élément par une liaison élastique (15) qui est agencée pour se déformer et permettre un déplacement du suiveur de came sur la came et une rotation relative entre les premier et second éléments pour amortir les acyclismes entre les premier et second éléments,
le suiveur de came (13) comportant :
• une tige (16) présentant une extrémité distale;
• un galet (14), coopérant avec la came, coaxial à la tige (16);
• des corps roulants (19) disposés dans un espace de roulement (36) qui contient un lubrifiant et est arrangé entre une piste de roulement externe (20) portée par le galet (14) et une piste de roulement interne (21) portée par la tige (16) pour permettre une rotation relative entre le galet (14) et la tige (16) ; **caractérisé par**
• un couvercle (27) qui est disposé en regard de l'extrémité distale de la tige (16) et est fixé de manière étanche sur le galet (14) de manière à recouvrir l'espace de roulement (36).

2. Amortisseur selon la revendication 1, dans lequel le couvercle (27) est disposé à distance de l'extrémité distale de la tige (16).

3. Amortisseur selon la revendication 1 ou 2, dans lequel le galet (14) comporte une rainure circulaire (30) et dans lequel le couvercle (27) comporte un rebord circulaire (28) reçu dans ladite rainure circulaire (30).

4. Amortisseur selon la revendication 3, dans lequel le rebord circulaire (28) du couvercle (27) est équipé d'un joint annulaire en élastomère (29).

5. Amortisseur selon la revendication 4, dans lequel le couvercle (27) comporte une tôle métallique et dans lequel le joint annulaire en élastomère (29) est surmoulé sur la tôle métallique.

6. Amortisseur selon l'une quelconque des revendications 3 à 5, dans lequel la rainure circulaire (30) est ménagée sur un pourtour interne du galet (14).

7. Amortisseur selon l'une quelconque des revendications 3 à 5, dans lequel la rainure circulaire (30) est ménagée sur un pourtour externe du galet (14).

8. Amortisseur selon l'une quelconque des revendications 1 à 7, dans lequel l'extrémité distale de la tige (16) comporte une cavité (37) qui contient du lubrifiant et débouche en regard du couvercle (27).

9. Amortisseur selon l'une quelconque des revendications 1 à 8, dans lequel le premier élément (2) comporte un rebord externe (7) qui est disposé radialement à l'extérieur du galet (14) et qui présente un évidement arqué (38) dans lequel le galet (14) est au moins partiellement logé.

10. Amortisseur selon la revendication 9, dans lequel le rebord externe (7) est séparé du pourtour extérieur du galet (14) par un interstice (39) dont la dimension radiale est inférieure à 0.5 mm, de préférence comprise entre 0.1 et 0.3 mm.

11. Amortisseur selon l'une quelconque des revendications 1 à 10, dans lequel l'extrémité distale de la tige (16) comporte un collet (22) faisant saillie radialement, dans lequel le suiveur de came (13) comporte une bague de retenue (23) qui est montée sur la tige (16) et est en appui axial en direction de l'extrémité distale de la tige (16) contre un épaulement (24) ménagé dans la tige (16) et dans lequel le galet (14) est retenu axialement entre le collet (22) et la bague de retenue (23).

12. Amortisseur selon la revendication 11, dans lequel le galet (14) comporte un pourtour interne présentant un premier épaulement (25) et un second épaulement (26) ménagés respectivement de part et d'autre de la piste de roulement externe (20) et coopérant respectivement avec le collet (22) et la bague de retenue (23) de manière à limiter le mouvement axial du galet (14).

13. Amortisseur selon la revendication 11 ou 12, dans lequel le suiveur de came (13) comporte une rondelle d'étanchéité (32) qui comporte un bord externe (33) fixée de manière étanche au galet (14) et un bord interne (34) coopérant de de manière étanche avec la bague de retenue (23).

14. Amortisseur selon l'une quelconque des revendications 1 à 13, dans lequel la tige (16) comporte une portion de fixation (16a) fixée au premier élément et dans lequel l'extrémité distale de la tige (16) est opposée à la portion de fixation (16a).

15. Amortisseur selon l'une quelconque des revendications 1 à 14, dans lequel l'un des premier et second éléments est un volant primaire (2) d'un double volant amortisseur (1) destiné à être fixé à une vilebrequin du moteur à combustion et l'autre des premier et second éléments est un volant secondaire (3) du double volant amortisseur (1).

## Patentansprüche

1. Schwingungsdämpfer für Kraftfahrzeug, insbesondere für eine Übertragungskette eines Kraftfahrzeugs, aufweisend:
- ein erstes Element (2) und ein zweites Element (3), die rotierend in Bezug aufeinander um eine Achse X beweglich sind; und
- einen Nockenfolger (13), der mit einem Nocken (40) zusammenwirkt, wobei der Nockenfolger (13) aufgebaut ist, um ein Drehmoment zwischen dem ersten Element (2) und dem Nocken (40) zu übertragen und der Nocken aufgebaut ist, um ein Drehmoment zwischen dem Nockenfolger (13) und dem zweiten Element (3) zu übertragen; wobei der Nocken (40) mit dem zweiten Element durch eine elastische Verbindung (15) verbunden ist, die aufgebaut ist, um sich zu verformen und eine Verlagerung des Nockenfolgers auf dem Nocken und eine relative Rotation zwischen dem ersten und zweiten Element zu gestatten, um die Drehschwingungen zwischen dem ersten und zweiten Element zu dämpfen,
wobei der Nockenfolger (13) aufweist:
• eine Stange (16), die ein distales Ende aufweist;
• eine Rolle (14), die mit dem Nocken zusammenwirkt, koaxial zu der Stange (16);
• Wälzkörper (19), die in einem Laufraum (36) angeordnet sind, der ein Schmiermittel enthält und zwischen einer äußeren Rollbahn (20), getragen von der Rolle (14), und einer inneren Rollbahn (21), getragen von der Stange (16), eingerichtet ist, um eine relative Rotation zwischen der Rolle (14) und der Stange (16) zu gestatten; **gekennzeichnet durch**
• einen Deckel (27), der gegenüber dem distalen Ende der Stange (16) angeordnet ist und der dicht auf der Rolle (14) derart befestigt ist, dass der Laufraum (36) abgedeckt ist.

2. Dämpfer nach Anspruch 1, wobei der Deckel (27) beabstandet vom distalen Ende der Stange (16) angeordnet ist.

3. Dämpfer nach Anspruch 1 oder 2, wobei die Rolle (14) eine kreisrunde Rille (30) aufweist und wobei der Deckel (27) eine kreisrunde Kante (28) aufweist, die in der kreisrunden Rille (30) aufgenommen ist.

4. Dämpfer nach Anspruch 3, wobei die kreisrunde Kante (28) des Deckels (27) mit einer Ringdichtung aus Elastomer (29) ausgestattet ist.

5. Dämpfer nach Anspruch 4, wobei der Deckel (27) ein Metallblech aufweist und wobei die Ringdichtung aus Elastomer (29) auf dem Metallblech aufgeformt ist.

6. Dämpfer nach einem der Ansprüche 3 bis 5, wobei die kreisrunde Rille (30) auf einem inneren Umfang der Rolle (14) eingearbeitet ist.

7. Dämpfer nach einem der Ansprüche 3 bis 5, wobei die kreisrunde Rille (30) auf einem äußeren Umfang der Rolle (14) eingearbeitet ist.

8. Dämpfer nach einem der Ansprüche 1 bis 7, wobei das distale Ende der Stange (16) einen Hohlraum (37) aufweist, der Schmiermittel enthält und gegenüber dem Deckel (27) ausmündet.

9. Dämpfer nach einem der Ansprüche 1 bis 8, wobei das erste Element (2) eine äußere Kante (7) aufweist, die radial außerhalb der Rolle (14) angeordnet ist und die eine gewölbte Aussparung (38) aufweist, in welcher die Rolle (14) mindestens zum Teil untergebracht ist.

10. Dämpfer nach Anspruch 9, wobei die äußere Kante (7) vom äußeren Umfang der Rolle (14) durch einen Spalt (39) getrennt ist, dessen radiale Abmessung kleiner als 0,5 mm, vorzugsweise zwischen 0,1 und 0,3 mm, ist.

11. Dämpfer nach einem der Ansprüche 1 bis 10, wobei das distale Ende der Stange (16) einen Kragen (22) aufweist, der radial hervorsteht, wobei der Nockenfolger (13) einen Haltering (23) aufweist, der auf der Stange (16) angebracht ist und der sich axial in Richtung des distalen Endes der Stange (16) auf einem Absatz (24) abstützt, der in der Stange (16) eingearbeitet ist, und wobei die Rolle (14) axial zwischen dem Kragen (22) und dem Haltering (23) gehalten wird.

12. Dämpfer nach Anspruch 11, wobei die Rolle (14) einen inneren Umfang aufweist, aufweisend einen ersten Absatz (25) und einen zweiten Absatz (26), die jeweils beiderseits der äußeren Rollbahn (20) eingearbeitet sind und jeweils mit dem Kragen (22) und dem Haltering (23) derart zusammenwirken, dass die axiale Bewegung der Rolle (14) begrenzt wird.

13. Dämpfer nach Anspruch 11 oder 12, wobei der Nockenfolger (13) eine Dichtungsscheibe (32) aufweist, die einen äußeren Rand (33) aufweist, der dicht an der Rolle (14) befestigt ist, und einen inneren Rand (34), der dicht mit dem Haltering (23) zusammenwirkt.

14. Dämpfer nach einem der Ansprüche 1 bis 13, wobei die Stange (16) einen Befestigungsabschnitt (16a) aufweist, der am ersten Element befestigt ist, und wobei das distale Ende der Stange (16) gegenüberliegend dem Befestigungsabschnitt (16a) ist.

15. Dämpfer nach einem der Ansprüche 1 bis 14, wobei eines von dem ersten und zweiten Element ein primäres Schwungrad (2) eines Doppeldämpfungsschwungrads (1) ist, das bestimmt ist, auf einer Kurbelwelle des Verbrennungsmotors befestigt zu sein, und das andere von dem ersten und zweiten Element ein sekundäres Schwungrad (3) des Doppeldämpfungsschwungrads (1) ist.

## Claims

1. Vibration damper for a motor vehicle, notably for a motor vehicle drivetrain, comprising:
- a first element (2) and a second element (3) capable of rotational movement with respect to one another about an axis X; and
- a cam follower (13) collaborating with a cam (40), the cam follower (13) being designed to transmit torque between the first element (2) and the cam (40), and the cam being designed to transmit torque between the cam follower (13) and the second element (3); the cam (40) being connected to the second element by an elastic connection (15) which is designed to deform and allow the cam follower to move over the cam and allow a relative rotation between the first and second elements in order to damp acyclism between the first and second elements,
the cam follower (13) comprising:
• a stem (16) having a distal end;
• a roller (14), collaborating with the cam, coaxial with the stem (16);
• rolling bodies (19) arranged in a rolling space (36) which contains a lubricant and is arranged between an external runway (20) borne by the roller (14) and an internal runway (21) borne by the stem (16) so as to allow a relative rotation between the roller (14) and the stem (16),
**characterized by**
• a cover (27) which is arranged facing the distal end of the stem (16) and is fixed fluidtightly over the roller (14) so as to cover the rolling space (36).

2. Damper according to Claim 1, in which the cover (27) is arranged at some distance from the distal end of the stem (16).

3. Damper according to Claim 1 or 2, in which the roller (14) comprises a circular groove (30) and in which the cover (27) comprises a circular rim (28) housed in the said circular groove (30).

4. Damper according to Claim 3, in which the circular rim (28) of the cover (27) is fitted with an annular elastomer seal (29).

5. Damper according to Claim 4, in which the cover (27) comprises a metal sheet and in which the annular elastomer seal (29) is overmoulded on the metal sheet.

6. Damper according to any one of Claims 3 to 5, in which the circular groove (30) is formed on an internal periphery of the roller (14).

7. Damper according to any one of Claims 3 to 5, in which the circular groove (30) is formed on an external periphery of the roller (14).

8. Damper according to any one of Claims 1 to 7, in which the distal end of the stem (16) comprises a cavity (37) which contains lubricant and opens facing the cover (27) .

9. Damper according to any one of Claims 1 to 8, in which the first element (2) comprises an external rim (7) which is arranged radially on the outside of the roller (14) and which has a curved recess (38) in which the roller (14) is at least partially housed.

10. Damper according to Claim 9, in which the external rim (7) is separated from the exterior periphery of the roller (14) by a gap (39) the radial dimension of which is less than 0.5 mm, preferably comprised between 0.1 and 0.3 mm.

11. Damper according to any one of Claims 1 to 10, in which the distal end of the stem (16) comprises a radially projecting collar (22), in which the cam follower (13) comprises a retaining ring (23) which is mounted on the stem (16) and which bears, axially in the direction of the distal end of the stem (16), against a shoulder (24) formed in the stem (16), and in which the roller (14) is axially retained between the collar (22) and the retaining ring (23).

12. Damper according to Claim 11, in which the roller (14) comprises an internal periphery having a first shoulder (25) and a second shoulder (26) which are respectively formed one on each side of the external runway (20) and respectively collaborate with the collar (22) and with the retaining ring (23) so as to limit the axial movement of the roller (14).

13. Damper according to Claim 11 or 12, in which the cam follower (13) comprises a sealing washer (32) which comprises an external edge (33) fixed fluidtightly to the roller (14) and an internal edge (34) collaborating fluidtightly with the retaining ring (23).

14. Damper according to any one of Claims 1 to 13, in which the stem (16) comprises a fixing portion (16a) fixed to the first element and in which the distal end of the stem (16) is at the opposite end to the fixing portion (16a).

15. Damper according to any one of Claims 1 to 14, in which one of the first and second elements is a primary flywheel (2) of a dual mass flywheel (1) intended to be fixed to a crankshaft of the combustion engine and the other of the first and second elements is a secondary flywheel (3) of the dual mass flywheel (1).
